# EUROPEAN PATENT APPLICATION

(11) **EP 3 040 670 A1**
(43) Date of publication of application: **06.07.2016**
(21) Application number: 15461501.7
(22) Date of filing: 05.01.2015
(51) Int. Cl.: F28F 3/04, F28D 9/00

(54) **HEAT EXCHANGER, IN PARTICULAR A CONDENSER OR A GAS COOLER**

(71) Applicant: VALEO AUTOSYSTEMY Sp. z o.o., 32-050 Skawina (PL)
(72) Inventor: Szostek, Dawid, PL-32-352 Kraków (PL); Fudala, Andrzej, PL-37-200 Przeworsk (PL); Romanski, Grzegorz, PL-31-564 Kraków (PL)
(74) Representative: Slominska-Dziubek, Anna

(57) **Abstract**

The invention relates to a heat exchanger, in particular a condenser or a gas cooler, comprising a core (1) combined with closure plates and a set of inner plates (7, 8) of two types, stacked between said closure plates. The first inner plates (7) comprising ridges (12) which have the form of individual elongated extruded protrusions spaced from each other and placed obliquely or parallel to the longitudinal direction of said plates in separate rows extending in the transverse direction of said plates. The second inner plates (8) comprising ridges (13), which have the form of continuous elongated extruded protrusions extending substantially along the whole length of said plates and in a generally longitudinal direction of said plates. The geometry and arrangement of said ridges (12,13) are selected to ensure minimum pressure drop in the flow of coolant and refrigerant and to induce turbulent flow of the coolant in the heat exchanger (20).

Preferably, the first inner plate ridges (12) are arranged relative to each other with a pitch (P1) in the range from 3 to 20 mm. The second inner plate ridges (13) are arranged relative to each other with a pitch (P2) in the range from 0,3 to 4 mm. Each of the first inner plates (7) and second inner plates (8) are formed of sheet metal having thickness(TH1, TH3) in the rage from 0.3 to 0.8 mm; their heights (H1, H3) are in the range from 0.5 to 3.0 mm.

## Description

### TECHNICAL FIELD

The object of the present application is a heat exchanger, in particular a condenser or a gas cooler, for use inter alia in automobile air-conditioning systems.

### BACKGROUND ODF THE INVENTION

Known solutions related to heat exchangers, in particular water-cooled condensers, are based on the known technology of oil coolers. Such heat exchangers comprise a core consisting of stacked corrugated inner plates forming a heat transfer surfaces, which plates all have the same pattern and dimensions of corrugations. The plates are usually extruded to form a pattern of bulges and recesses on their surface. Combining the plates into a stack or a packet in a leak-proof manner, for example by welding, soldering or screwing between outer end panels, forms compartments between the plates with a system of channels that provide turbulent flow of a coolant or a refrigerant, respectively. The plates are also provided with openings made in appropriate places, which, after the sealing a packet of plates, form inlet and outlet channels for heat transfer media.

The characteristic features of panel heat exchangers consists in that the flow paths of media are interleaved, i.e. the spaces between successive plates in the stack of plates are alternatively used as compartments for a heat-emitting medium and a heat-receiving medium. Additionally, the channels, formed by the contacting extruded patterns of neighboring plates, split the stream of each medium into many smaller streams and impart turbulences to the stream flow, which results in enhanced heat transfer between the media.

One example of a heat exchanger is Valeo's condenser based on the technology applied in the construction of oil coolers using water. The said construction uses extruded patterns on the heat exchanger plates, the so-called corrugations, formed as continuous ridges disposed between the longer sides of the plate, the arrangement of which resembles a fishbone. The two circuits, i.e. the refrigerant circuit and the coolant circuit, are interleaved while running alternatively through subsequent spaces between inner plates. It should be noted that this solution provides for the use of the same extruded patterns on the subsequent inner plates of the core, as a result of which the formed flow paths of the both circuits are the same. Such construction limits the range of media that may be effectively used to provide transfer of heat to a liquid only, and it does not take into account specific properties of various media used. In other words, the same shape of the corrugations of plates subsequently placed in the core ensures effective reduction of flow velocity and imparting flow turbulences only for two heat transfer substances, which have similar physical properties.

In another example, a known heat exchanger comprises a core whose all inner plates are provided with corrugations in the form of extruded patterns arranged parallel to each other and to the longer sides of the plates. The core of this heat exchanger also has the disadvantages indicated above.

It should be noted that in the case of a heat exchanger wherein the heat emitting refrigerant is a gas that changes its physical state to a liquid as a result of cooling, and the heat-receiving coolant is a liquid, it is essential to adequately control the flow of each of these media separately, i.e. to reduce the flow speed thereof, to impart suitable turbulences in individual flow streams and to split them suitably while maintaining low pressure drop in the flowing medium. Due to different physical properties of the media participating in heat transfer, it is necessary to form the paths of their flow through the compartments of a heat exchanger in a different way so as to obtain the most efficient heat transfer there between.

An example of a heat exchanger serving as the condenser of a gaseous refrigerant in an automotive air-conditioning system is provided by the solution described in U.S. patent application No. 2013/0153072 of Delphi Technologies, Inc. Said solution comprises two end plates defining there between a slot that houses a turbulator panel. The turbulator panel is used both to reinforce the structure between the end plates and as an obstacle to the refrigerant flow stream to cause a decrease in the flow rate and to impart disturbance to the flow resulting in a change into liquid phase. The liquid is collected in the bottom part of the condenser or is discharged to the outside, depending on the arrangement of inlet and outlet channels. The construction of such a condenser may use a larger number of turbulator panels separated with inner plates, which lengthens the flow path of a refrigerant in the heat exchanger and ensures suitable conditions for condensation.

The above-mentioned patent application No. 20130153072 presents only the flow circuit of a refrigerant, whereas the suggested possibility to introduce the circuit of a coolant has not been precisely described in terms of the shape thereof. Additional turbulator panels used in that solution complicate the construction of and increase the weight and dimensions of the heat exchanger, which is disadvantageous in uses in motor vehicles.

One object of the present invention is to provide a heat exchanger that has independent and differing in shape flow paths of a refrigerant and a coolant, suitably adjusted to different physical properties of each of the media being said coolant and refrigerant, and that is at the same time compound and has a lower weight.

Another object of the present invention is to provide a heat exchanger with a significantly increased heat transfer efficiency, allowing optimum flow rate of each of the media participating in heat exchange and the impart of turbulences while maintaining low pressure drop in each medium participating in the transfer.

### SUMMARY OF THE INVENTION

The aim of the present invention has been achieved by a heat exchanger provided with features described in the independent claim 1.

The features of preferable variants of the invention are defined in the dependent claims 2-10.

According to the invention, a heat exchanger, in particular a condenser or a gas cooler, comprises a core provided with at least a set of stacked inner plates provided on their surface with ridges and holes for feeding and carrying away a coolant and refrigerant, respectively; and coolant compartments and refrigerant compartments defined alternately between adjacent inner plates.

The heat exchanger according to the invention is characterized in that the inner plates comprise alternately arranged: first inner plates comprising ridges which have the form of individual elongated extruded protrusions spaced from each other and placed obliquely or parallel to the longitudinal direction of said compartments in separated rows extending in the transverse direction of said compartments;; and second inner plates comprising ridges which have the form of continuous elongated extruded protrusions extending substantially along the whole compartment and in a generally longitudinal direction of compartments. The geometry and arrangement of said ridges of the first inner plate and the geometry and arrangement of said ridges of the second inner plate are selected to ensure minimum pressure drop in the flow of a coolant and refrigerant and to induce turbulent flow of the coolant in the heat exchanger.

The heat exchanger according to the present invention comprises a core consisting of differently shaped inner plates. The core has an improved packing, which makes it possible to reduce the dimensions and weight thereof. The use of inner plates of a different geometry of their surface makes it possible to individually adjust the shape of the coolant and refrigerant flow channels in the particular compartment to the coolant and refrigerant physical properties. This at the same time eliminates the need to use additional turbulator inserts in the coolant and refrigerant compartments known in the state of the art, which additionally reduces the weight of the exchanger and production costs thereof.

Preferably, the geometry and arrangement of said ridges of the first and second inner plates on the side of the refrigerant compartment are selected such that the hydraulic diameter of the said refrigerant compartment, defined as the cross-sectional area of the medium flow path in the refrigerant compartment multiplied by four and divided by wetted perimeter of the corresponding flow path in that compartment, is in the range from 0.4 mm to 1.3 mm.

Preferably, the geometry and arrangement of said ridges of the first and second inner plates on the side of the coolant compartment are selected such that the hydraulic diameter of the said coolant compartment, defined as the cross-sectional area of the medium flow path in the coolant compartment multiplied by four and divided by wetted perimeter of the corresponding flow path in the that compartment, is in the range from 1.0 to 2.5 mm.

Preferably, the geometry and arrangement of said ridges of the first inner plate and the second inner plate, respectively, are selected such that pressure drop in the flow of coolant in coolant compartments is less than 0.14 bar, whereas pressure drop in the flow of refrigerant in refrigerant compartments is less than 0.5 bar.

Preferably, the geometry and arrangement of said ridges of the first inner plate and the second inner plate, respectively, are selected such that the flow of coolant in said coolant compartments is turbulent and the Reynolds number of coolant flow is more than 3000.

Preferably, the heights of the ridges of the first inner plate and the second inner plate, respectively, are equal.

Preferably, said ridges of the first inner plate are arranged relative to each other with a pitch, defined as a distance between the centre points of the neighbouring ridges on one side of the first inner plate, being in the range from 3 mm to 20 mm; each of the first inner plates is formed of sheet metal having thickness in the range from 0.3 mm to 0.8 mm, height of the first inner plate, measured as a distance between the extreme points of its opposite surfaces in the cross section, being in the range from 0.5 to 3.0 mm

Preferably, said ridges of the second inner plate are arranged relative to each other with a pitch, defined as a distance between the centre points of neighbouring ridges on one side of the second inner plate, being in the range from 0.3 mm to 4 mm; each of the second inner plates is formed of sheet metal having thickness in the range from 0.3 mm to 0.8 mm, height of the second inner plate, measured as a distance between the extreme points of its opposite surfaces in the cross section, being in the range from 0.5 to 3.0 mm.

Preferably, the first inner plate and the second inner plate are made of sheet metal of equal thicknesses.

Preferably, said ridges of the first inner plate are rectilinear and bent at the ends thereof in opposite directions and the ridges of neighbouring rows are inclined in different directions, substantially perpendicular to each other, whereas the ends of the ridges of one row are offset in the transverse direction of the compartments with respect to the ends of the ridges of neighbouring rows.

In another variant of the invention, the ridges of the first inner plate are rectilinear and the ridges of neighbouring rows are inclined in different directions, substantially perpendicular to each other, whereas the ends of the ridges of one row are situated opposite the ends of the ridges of the neighbouring rows.

Preferably, the ridges of the second inner plate are parallel to each other and to the longitudinal direction of said compartments.

Preferably, the ridges of the second inner plate are parallel to each other, and at the end of the compartments the ridges are straight, whereas in the middle part they are sinusoidal.

Preferably, the inner plates are made by the extrusion of a sheet of aluminium or alloys thereof.

Preferably, the heat exchanger further comprises a bottom closure plate and a top closure plate, the latter having a coolant inlet and outlet and at least one inlet and outlet of refrigerant; and said stacked inner plates are situated between said closure plates; and said coolant compartments and refrigerant compartments are connected with said coolant inlet and outlet and said refrigerant inlet and outlet, respectively, to define separated hydraulic circuits for the coolant and refrigerant, wherein said specific longitudinal direction of said coolant compartments and refrigerant compartments is generally the same as the flow of the coolant and refrigerant between the inlets and outlets thereof in said compartments, and said transverse direction said compartments is perpendicular to the longitudinal direction.

### BRIEF DESCRIPTION OF THE DRAWINGS

Other features and advantages of the invention will result from the further description thereof, which is presented in the examples of detailed, non-limiting embodiments with reference to the figures of the drawing wherein:
Fig. 1 shows a perspective view of an embodiment of the heat exchanger according to the invention,
Fig. 2 shows a plan view of the first embodiment of an inner plate of the first type of the heat exchanger in Fig 1,
Fig. 3 shows a plan view of the second embodiment of an inner plate of the first type of the heat exchanger in Fig 1,
Fig. 4 show a cross-sectional view of an inner plate of the first type of the heat exchanger, along lines IV-IV in Figures 2 and 3,
Fig. 5 shows a plan view of a first embodiment of an inner plate of the second type of the heat exchanger in Fig. 1,
Fig. 6 shows a plan view of a second embodiment of an inner plate of the second type of the heat exchanger in Fig. 1,
Fig. 7 shows a cross-sectional view of the second type of an inner plate of the core of a heat exchanger, along line VII-VII in Fig. 5 and 6,
Fig. 8 shows a mounted stack of inner plates of the first and second type, forming a fragment of the heat exchanger core, in a cross-sectional view along plane perpendicular to the longer side of the core in Fig. 1,
Fig. 9 shows a plan view of a third embodiment of the first type of an inner plate of the core of the heat exchanger in Fig. 1,
Fig. 10 shows a plan view of a third embodiment of the second type of an inner plate of the core of the heat exchanger in Fig. 1,
Fig. 11 shows a cross-sectional view of the first type of an inner plate of the core of the heat exchanger, across lines XI-XI in Fig. 9.

### DESCRIPTION OF THE EMBODIMENTS

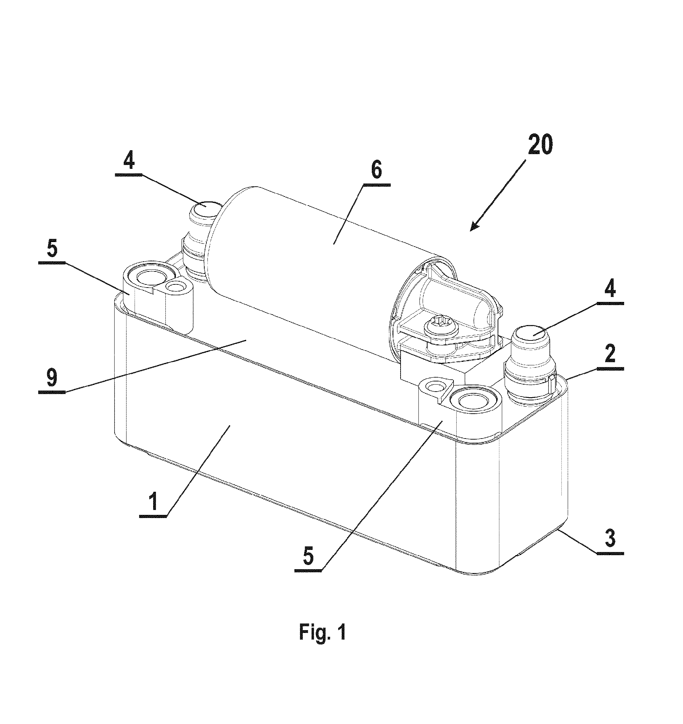

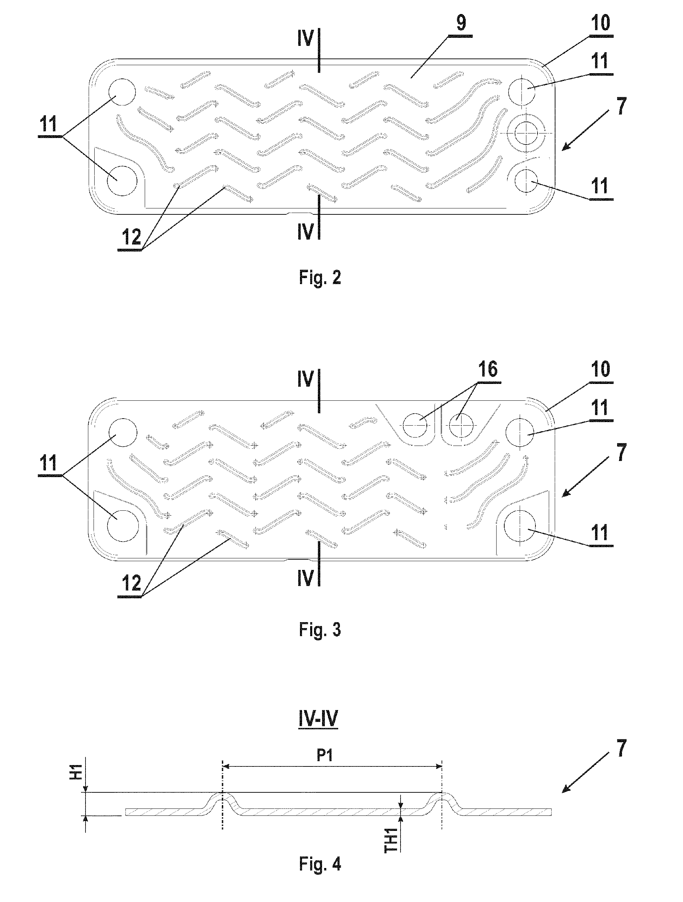

Fig. 1 presents an embodiment of a heat exchanger 20 being a condenser for a gaseous cooling agent wherein a circuit was formed for a liquid coolant, usually water, glycol or a combination thereof, which coolant participates in heat exchange with a refrigerant and supports the process of its condensation. The presented solution is intended for use in an automobile air-conditioning installation. The heat exchanger comprises a core 1 consisting of stacked plates (presented in more detail in Figs. 2-11). The plates of the core 1 are made of sheet metal, for example, aluminium or alloys thereof, by extrusion.

The core 1 comprises a top closure plate 2 and a bottom closure plate 3, and in the presented embodiment the bottom closure plate 3 does not have holes, whereas the top closure plate is provided with a coolant inlet and outlet (generally marked as 4) and a refrigerant inlet and outlet (generally marked as 5), to which stub pipes are fastened for connecting with an air-conditioning installation, for feeding and carrying away media participating in heat transfer in the heat exchanger. The heat exchanger 1 may comprise a dryer 6 connected to the outlet of the refrigerant circuit.

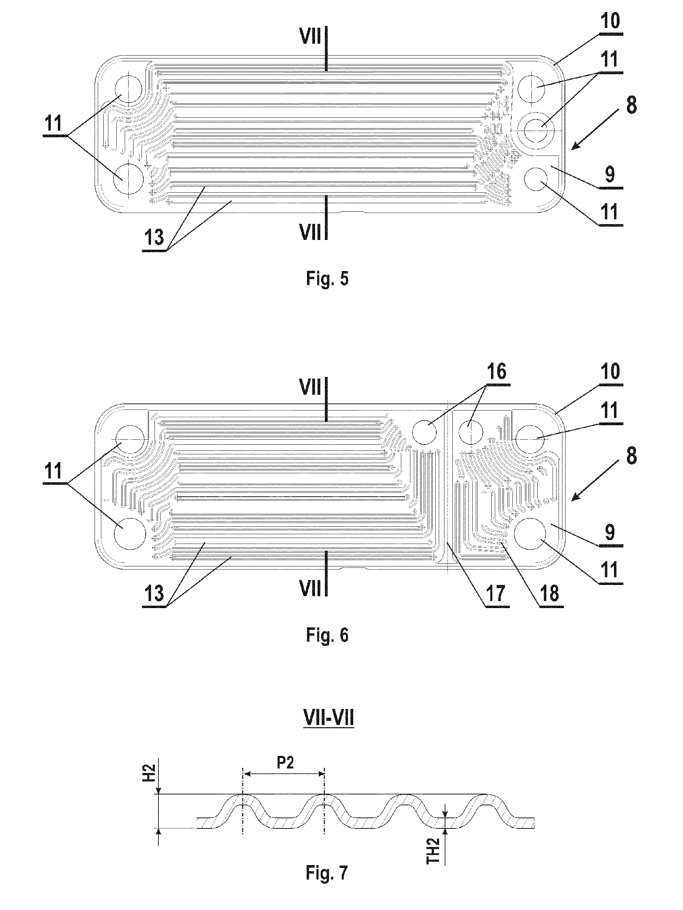

In the core 1, between the top closure plate 2 and the bottom closure plate 3 there are provided stacked, arranged parallel and alternately with respect to each other two types of inner plates comprising first inner plates 7 for directing the flow of a coolant (presented in more detail in Figs. 2-4, 9 and 10) and second inner plates 8 for directing the flow of a refrigerant (presented in more detail in Figs. 5-7 and 11). The inner plates 7, 8 of the two types differ in the shape of their surface.

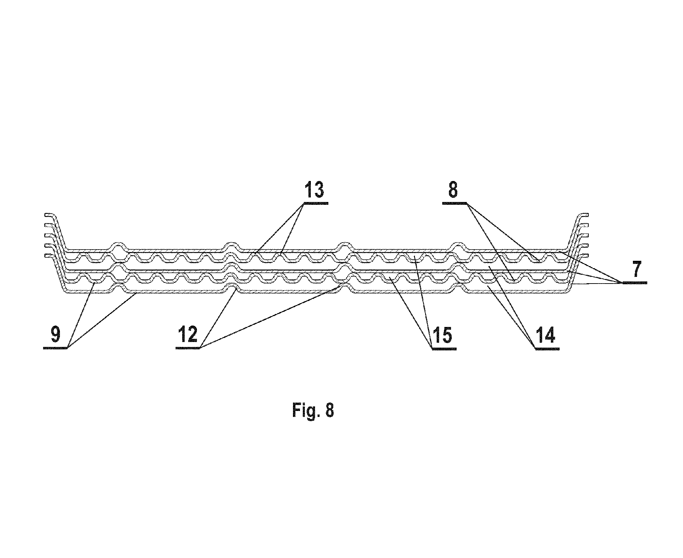

The closure plates 2, 3 and the inner plates 7, 8 of the core 1 have middle parts 9 and surrounding flanges 10. After stacking the plates, their flanges are contacted to the flanges of the neighbouring inner plates, as a result of which separated, closed compartments 14, 15 are formed between the neighbouring plates 7, 8 (Fig. 8). In the middle parts 9 of the inner plates 7, 8, at their opposite shorter sides, there are formed holes 11 for feeding, carrying away or carrying through a coolant or refrigerant between the closed compartments 14, 15. Said holes 11 are connected in a leak-proof manner in a suitable configuration, usually by means of extruded flanges surrounding the holes and soldered to each other, and thus they form, together with the compartments 14, 15 defined between the inner plates 7, 8, circuits for each medium transferring heat. The mutual connections of holes 11 are made such that the compartments 14, 15 between the neighbouring pair of inner plates 7, 8 belong to different circuits, as a result of which the coolant and refrigerant circuits are interleaved (Fig. 8). Furthermore, said holes 11 are arranged at the opposite ends of the inner plates 7, 8 and are connected in such a way that within one compartment 14, 15, the coolant or refrigerant flows between the inlet hole in one of the inner plates 7, 8 and the outlet hole in the neighbouring inner plate 7, 8 filling the whole volume of the compartment 14, 15 between said inner plates 7, 8. Thus, it is determined a specific longitudinal direction of the compartments 14, 15, being the same as the general direction of media flow between the media inlet and outlet have, and it is determined a transverse direction of the compartments 14, 15, being perpendicular to the longitudinal direction, and similarly, a longitudinal direction and transverse direction, respectively, are defined for the inner plates 7, 8.

The first inner plates 7 and the second inner plates 8 (Fig. 2-11) in their middle part 9 are provided with extrusion-moulded ridges 12, 13 respectively, forming spaced protrusions on one surface and recesses on the other surface of each plate. Said ridges 12 of the first inner plate 7 have a geometry that differs from the geometry of said ridges 13 of the second inner plate 8.

According to the invention, said ridges 12 of the first inner plate 7 are shaped as individual elongated extruded protrusions spaced from each other and placed obliquely or parallel to the longitudinal direction of said first inner plates 7 and said compartments 14, 15 in separate rows extending in the transverse direction of said first inner plates 7. (Fig. 2-4, 9, 10).

According to the invention, said ridges 13 of the second inner plate 8 are shaped as continuous elongated extruded protrusions extending substantially along the whole length of the second inner plate 8 and said compartments 14, 15 and in a generally longitudinal direction of the second inner plate 8 and said compartments 14, 15. Fig. 5-7, 11)

The expression "generally" or "substantially" means that respective feature is dominant, but exceptions are admissible, for example, in the shape of ridges at end part of compartments 14,15 where the arrangement of ridges may be different due to the presence of holes 11.

In the assembled core 1, as shown in Fig. 8, the first inner plates 7 and the second inner plates 8 are stacked alternately and abut on each other in their middle parts 9. The inner plates 7, 8 contact each other by means of selected extruded protrusions that face each other of the neighbouring inner plates 7, 8. Thus, between the contact point of individual ridges 12, 13 there are formed predetermined flow paths of the coolant and refrigerant in the compartments 14, 15, respectively, formed between the inner plates 7, 8. Between the top surfaces of first inner plates 7 and bottom surfaces of second inner plates 8 there is formed a coolant compartment 14 (Fig. 8) wherein the protruding ridges 12 of the first inner plate 7 define coolant flow paths connected to the coolant inlet and outlet 4; whereas between the top surfaces of the second inner plates 8 and the bottom surfaces of the first inner plates 7 there is formed a refrigerant compartment 15 wherein the protruding ridges 13 of the second inner plate 8 limit refrigerant flow paths connected to the refrigerant inlet and outlet 5.

The geometry, i.e. the shape and size, and the arrangement of the ridges 12, 13 in the first inner plate 7 and the second inner plate 8, respectively, are selected to ensure low pressure drop in both the coolant and refrigerant flows, which is a consequence of flow resistance thereof in the compartments 14, 15, and to maintain efficient heat transfer. The selection of the shape and size as well as the arrangement of the ridges 12, 13 is made on the basis of experiments using prototypes of cores and supported by computer software applied in Computational Fluid Dynamics (CFD). The selection of the shape and size as well as the arrangement of the ridges 12, 13 are made such that pressure drop in the coolant flow is less than 0.14 bar and the coolant flow is in the range of 700 - 800 kg/h at 50°C, with the coolant being 50/50 mixture of glycol and water; and pressure drop in the refrigerant flow is less than 0.5 bar and the refrigerant flow is approximately 200 kg/h at 50°C, with inlet temperature being approximately 100°C and with the refrigerant is CF3-CH2F known by its commercial name as R134a.

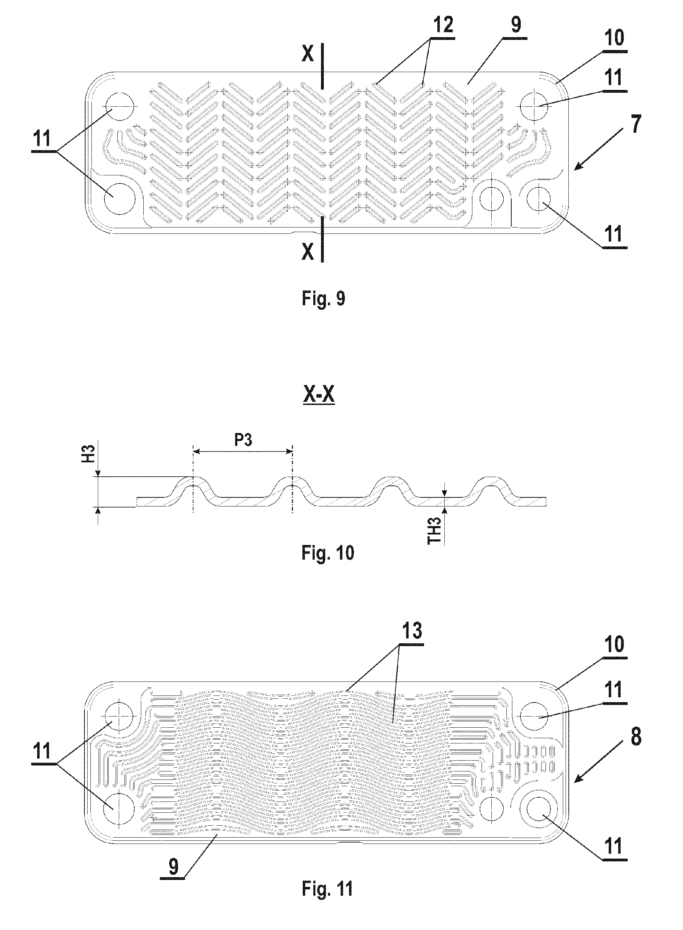

According to the invention, the first inner plate 7 extruded from sheet metal having a thickness TH1 (Figs. 4, 11), whereas the second inner plate 8 is formed of sheet metal (metal plate) having a thickness TH2 (Fig. 7), the thicknesses TH1 and TH2 of the metal plates being in the rage from 0.3 to 0.8 mm. Preferably, thickness TH1 and thickness TH2 of the inner plates 7, 8 are equal. Preferably, the inner plates 7, 8 are formed by extrusion of sheet of aluminium or alloys thereof.

Furthermore, the first inner plate 7, as shown in Figs. 4 and 11 illustrating a cross-section thereof, has a height H1, measured as the distance between the extreme points of its opposite surfaces in a cross-section, being in the range 0.5 mm to 3.0 mm, and the second inner plate 8, as shown in Fig. 7 illustrating a cross-section thereof, has a height H2, measured as the distance between the extreme points of its opposite surfaces in a cross-section, being in the range 0.5 mm to 3.0 mm. Preferably, the height H1 of the first inner plate 7 is equal with the height H2 of the second inner plate 8, which facilitates the design and production of the inner plates 7, 8, since in such case the height of flanges 10 of closure plates 2, 3 and the inner plates 7, 8 may be the same.

Ridges 12 of the first inner plate 7 are arranged relative to each other with a pitch P1, defined as a distance between the centre points of the neighbouring ridges 12 on one side of the first inner plate 7, measured in the cross-section along the transverse direction of the compartments 14, 15; according to the invention, the pitch P1, that determines the arrangement of the ridges 12 of the first inner plate 7, is selected from the range of 3 mm to 20 mm.

Ridges 13 of the second inner plate 8 are arranged relative to each other with a pitch P2, defined as a distance between the centre points of the neighbouring ridges 13 on one side of the second inner plate 8, measured in the cross-section along the transverse direction of the compartments 14, 15; according to the invention, the pitch P2, that determines the arrangement of the ridges 13 of the second inner plate 8, is selected from the range of 0.3 mm to 4 mm.

The geometry and arrangement of the ridges 12, 13 of the first inner plate 7 and the second inner plate 8, respectively, on the side of the refrigerant compartment 14 is selected such that the hydraulic diameter of that one refrigerant compartment 14 is in the range from 0.4 mm to 1.3 mm.

The geometry and arrangement of said ridges 12, 13 of the first inner plate 7 and the second inner plate 8, respectively, on the side of the coolant compartment 14 is selected such that the hydraulic diameter of that one coolant compartment 14 is in the range from 1.0 mm to 2.5 mm.

Typically, the hydraulic diameter is defined as the cross-sectional area of the medium flow path in given compartment 14, 15 multiplied by four and divided by wetted perimeter of the corresponding flow path in said compartment 14, 15. Practically, considering that the coolant and refrigerant fill the whole volumes of said compartments 14, 15, the wetted parameters of the flow path are equal to the whole perimeters of the compartments 14, 15 as measured in the cross-sections thereof.

The geometry and arrangement of said ridges 12, 13 of the first inner plate 7 and the second inner plate 8, respectively, are selected such that the flow of coolant in said coolant compartment 15 is turbulent and the Reynolds number of coolant flow is more than 3000. The selection is made by simulation methods used Computational Fluid Dynamics (CFD).

In the embodiments presented in Figs. 2-4, the first inner plate 7 has a rectangular shape, and its non-continuous ridges 12, which in combination with ridges 13 of the second inner plate 8 form channels directing the flow of media, have the form of individual rectilinear extruded protrusions, bent at their ends. In said first inner plate 7, the ridges 12 are arranged parallel to each other in separate rows situated in the transverse direction of said first inner plate 7 and the compartments 14, 15 and obliquely or parallel to the longitudinal direction of said first inner plate 7 and the compartments 14, 15. Additionally, in one embodiment, said ridges 12 of the neighbouring rows are inclined in different directions, substantially perpendicular to each other, and the ends of said ridges 12 in one row are offset in the transverse direction of said first inner plate 7 and compartments 13, 14 relative to the ridges 12 in the neighbouring rows. (Fig. 2,3)

Said first inner plate 7 may be used in a heat exchanger with a separate compartment for refrigerant subcooling. To this end, as shown in Fig. 3, said plate has additional holes 16 to lead refrigerant conduits.

In the third embodiment shown in Figs. 9, 10, the non-continuous ridges 12 of the first inner plate 7 have the form of individual, rectilinear extruded protrusions which, in a similar manner as in the first and second embodiment, are also spaced from each other and arranged parallel to each other in separate rows in the transverse direction of the first inner plate 7 and the compartments 14, 15 as well as obliquely to the longitudinal direction of the first inner plate 7 and the compartments 14, 15 and to the longitudinal direction of the inner plate 7, and said ridges 12 of the neighbouring rows are inclined in opposite directions. In this embodiment, the ends of ridges 12 in one row are situated opposite the ends of the neighbouring row ridges 12.

Due to non-continuous shape of said first inner plate ridges 12 and their arrangement in transverse, separated rows, according to the invention, the coolant flow paths have a labyrinth-like shape and thus they increase coolant turbulence and heat transfer. Resultantly, the number and length of said ridges 12 in the first inner plate 7 may be considerably smaller compared to the known plate with the fishbone pattern of corrugations.

In the second inner plate 8 (Figs. 5-7, 11), in its middle part 9, there are formed continuous ridges 13.

In the presented embodiments of Figs. 5-7, the second inner plate 8 has a rectangular shape, and its continuous ridges 13 are in the form of extruded protrusions extending parallel to each other in the longitudinal direction of said second inner plate 8 and parallel to the longitudinal direction of the second inner plate 8 and the compartments 14, 15. In the cross-section along the transverse direction of the second inner plate 8 and the compartments 14, 15, the ridges 13 have a corrugated shape.

The second inner plate 8 may be adapted to form an additional compartment for refrigerant subcooling. To this end, as shown in Fig. 6, said plate comprises an additional rib 17 separating the additional subcooling compartment 18, and said plate is also provided with additional holes 16 corresponding to the hole 16 of the first inner plate 7 in Fig. 3.

In the third embodiment shown in Fig. 11, the continuous ridges 13 of the second inner plate 8 have the form of extruded protrusions which are parallel to each other in the longitudinal direction of said second inner plate 8, the extruded protrusions are generally straight at their ends and in they are sinusoidal at their middle parts. The cross-section of this second inner plate 8, in the transverse direction of the inner plate 8, is similar to that presented in Fig. 7.

The first inner plates 7 shown in Figs. 2-4 and in Figs. 9, 10 and the second inner plates 8 shown in Figs. 5-7 and in Fig. 11 may be combined together in any configuration provided that the core 1 formed thereby meets the conditions for the coolant and refrigerant flow as specified herein.

In the heat exchanger according to the present invention, the coolant may be water, and the refrigerant may be gas. Preferably, 50/50 mixture of water and glycol is also used as the coolant and the preparation CF3-CH2F, known under the trade name R134a, is used as the refrigerant.

## Claims

1. A heat exchanger, in particular a condenser or a gas cooler, comprising a core (1) provided with at least:
a set of stacked inner plates (7, 8) provided on their surface with ridges (12, 13) and holes (11) for feeding and carrying away a coolant and refrigerant, respectively, and
coolant compartments (14) and refrigerant compartments (15) determined alternately between adjacent inner plates (7, 8);
**characterised in that**
the inner plates comprise alternatively arranged:
- first inner plates (7) comprising ridges (12) which have the form of individual elongated extruded protrusions spaced from each other and placed obliquely or parallel to the longitudinal direction of said compartments (14, 15) in separate rows extending in the transverse direction of said compartments (14, 15); and
- second inner plates (8) comprising ridges (13), which have the form of continuous elongated extruded protrusions extending substantially along the whole length of said compartment (14, 15) and in a generally longitudinal direction of said compartments (14, 15);
wherein the geometry and arrangement of said ridges (12) of the first inner plate (7) and geometry and arrangement of said ridges (13) of the second inner plate (8) are selected to ensure minimum pressure drop in the flow of coolant and refrigerant and to induce turbulent flow of the coolant in the heat exchanger (20).

2. The heat exchanger according to claim 1 **characterized in that** the geometry and arrangement of said ridges (12, 13) of the first (7) and second (8) inner plates on the side of the refrigerant compartment (15) are selected such that the hydraulic diameter of the said refrigerant compartment (15), defined as the cross-sectional area of the medium flow path in the refrigerant compartment (15) multiplied by four and divided by wetted perimeter of the corresponding flow path in the refrigerant compartment (15), is in the range from 0.4 to 1.3 mm.

3. The heat exchanger according to claims 1 or 2 **characterised in that** that the geometry and arrangement of said ridges (12, 13) of the first (7) and second (8) inner plates on the side of the coolant compartment are selected such that the hydraulic diameter of the said coolant compartment (14), defined as the cross-sectional area of the medium flow path in the coolant compartment (14) multiplied by four and divided by wetted perimeter of the corresponding flow path in the coolant compartment (15), is in the range from 1.0 mm to 2.5 mm.

4. The heat exchanger according to one of the preceding claim **characterised in that** the geometry and arrangement of said ridges (12, 13) of the first inner plate (7) and the second inner plate (8), respectively, are selected such that pressure drop in the flow of coolant in coolant compartments (14) is less than 0.14 bar, whereas pressure drop in the flow of refrigerant in refrigerant compartments (15) is less than 0.5 bar.

5. The heat exchanger according to one of the preceding claims **characterised in that** the geometry and arrangement of said ridges (12, 13) of the first inner plate (7) and the second inner plate (8), respectively, are selected such that the flow of coolant in said coolant compartments (14) is turbulent and the Reynolds number of coolant flow is more than 3000.

6. The heat exchanger according to one of the preceding claims **characterised in that** the heights (H1, H2, H3) of the ridges (12, 13) of the first inner plate (7) and the second inner plate (8), respectively, are equal.

7. The heat exchanger according to one of the preceding claims **characterised in that** said ridges (12) of the first inner plate (7) are arranged relative to each other with a pitch (P1, P3), defined as a distance between the centre points of the neighbouring ridges (12) on one side of the first inner plate (7), being in the range from 3 to 20 mm; each of the first inner plates (7) is formed of sheet metal having thickness (TH1, TH3) in the range from 0.3 to 0.8 mm; height (H1, H3) of the first inner plate (7), measured as a distance between the extreme points of its opposite surfaces in the cross section, being in the range from 0.5 to 3.0 mm.

8. The heat exchanger according to one of the preceding claims **characterised in that** said ridges (13) of the second inner plate (8) are arranged relative to each other with a pitch (P2), defined as a distance between the centre points of neighbouring ridges (13) on one side of the second inner plate (8) in the range from 0,3 to 4 mm; each of the second inner plates (8) is formed of sheet metal having thickness (TH2) in the range from 0.3 to 0.8 mm, height (H2) of the second inner plate (8), measured as a distance between the extreme points of its opposite surfaces in the cross section, is in the range from 0.5 to 3.0 mm.

9. The heat exchanger according to one of the preceding claims **characterised in that** the first inner plate (7) and the second inner plate (8) are made of sheet metal of equal thicknesses (TH1, TH2, TH3).

10. The heat exchanger according to claims 1-9 **characterised in that** said ridges (12) of the first inner plate (7) are rectilinear and bent at the ends thereof in opposite directions and said ridges (12) of the neighbouring rows are inclined in different directions, substantially perpendicular to each other, whereas the ends of the ridges (12) of one row are offset in the transverse direction of the compartments (14, 15) with respect to the ends of the ridges (12) of neighbouring rows.

11. The heat exchanger according to claims 1-9 **characterised in that** said ridges (12) of the first inner plate (7) are rectilinear and said ridges (12) of the neighbouring rows are inclined in different directions, substantially perpendicular to each other, whereas the ends of the ridges (12) of one row are situated opposite the ends of the ridges (12) of the of neighbouring rows.

12. The heat exchanger according to claims 1-9 **characterised in that** said ridges (13) of the second inner plate (8) are parallel to each other and to the longitudinal direction of said compartments (14, 15).

13. The heat exchanger according to claims 1-9 **characterised in that** said ridges (13) of the second inner plate (8) are parallel to each other, and at the end of the compartments (14, 15) the ridges (13) are straight, whereas in the middle part they are sinusoidal.

14. The heat exchanger according to one of the preceding claims **characterised in that** said inner plates (7, 8) are made by the extrusion of a sheet of aluminium or alloys thereof

15. The heat exchanger according to one of the preceding claims further comprising a bottom closure plate (3) and a top closure plate (2), the latter having a coolant inlet and outlet (4) and at least one inlet and outlet (5) of refrigerant; and said set of the inner plates (7,8) is situated between said closure plates (2,3); and said coolant compartments (14) and refrigerant compartments (15) are connected with said coolant inlet and outlet (4) and said refrigerant inlet and outlet (5), respectively, to define separated hydraulic circuits for the coolant and refrigerant, wherein said specific longitudinal direction of said coolant compartments (14) and refrigerant compartments (15) is generally the same as the flow of the coolant and refrigerant between the inlets and outlets thereof in said compartments (14, 15), and said transverse direction said compartments (14, 15) is perpendicular to the longitudinal direction.
